# EUROPEAN PATENT SPECIFICATION

(11) **EP 2 922 130 B1**
(45) Date of publication and mention of the grant of the patent: **17.08.2016**
(21) Application number: 15159556.8
(22) Date of filing: 18.03.2015
(51) Int. Cl.: H01M 8/0438, H01M 8/04746, H01M 8/124

(54) **FUEL CELL SYSTEM**
BRENNSTOFFZELLENSYSTEM
SYSTÈME DE PILE À COMBUSTIBLE

(30) Priority: 20.03.2014 JP 2014058598
(43) Date of publication of application: 23.09.2015
(73) Proprietor: AISIN SEIKI KABUSHIKI KAISHA, Kariya-shi, Aichi 448-8650 (JP)
(72) Inventor: Ohkawara, Hiroki, Kariya-shi, Aichi 448-8650 (JP)
(74) Representative: TBK

(56) References cited:
- EP-A1- 2 551 947
- JP-A- 2008 198 406
- JP-A- 2009 217 951
- JP-A- 2010 257 743
- US-A1- 2010 068 574
- US-A1- 2012 070 753
- US-A1- 2013 034 791
- US-A1- 2013 288 146
- US-A1- 2013 337 355

## Description

### TECHNICAL FIELD

This disclosure generally relates to a fuel cell system.

### BACKGROUND DISCUSSION

A known fuel cell system is disclosed in JP2012-169214A (which will be hereinafter referred to as Patent reference 1). The known fuel cell system disclosed in Patent reference 1 includes a hydrogen generation portion generating a hydrogen-containing gas using fuel which contains hydrogen, a detection portion detecting oxygen or nitrogen which is in the fuel, a calculation portion calculating amount of air included in the fuel on the basis of a detection result of the detection portion, and an adjustment portion adjusting a supply amount of the fuel on the basis of the amount of air included in the fuel. In a case where a supply pressure of the fuel decreases, a supply source supplying the fuel to the hydrogen generation portion may mix air into the fuel so that the supply pressure at which the fuel is supplied to the hydrogen generation portion is adjusted to be constant. In a case where the air is mixed into the fuel, however, a flow amount of the fuel cannot be detected accurately. Accordingly, where there is a shortage in the fuel supplied to the hydrogen generation portion, the fuel cell system may not be capable of performing a heat self-supporting operation or a heat self-sustained operation. Thus, according to the known fuel cell system of Patent reference 1, the calculation portion calculates the amount of the air included in the fuel on the basis of a detected value, which is detected by the detection portion, of the oxygen or the nitrogen in the fuel, and the adjustment portion adjusts the supply amount of the fuel appropriately.

A known fuel processing system is disclosed in JP4038390B (which will be hereinafter referred to as Patent reference 2). The known fuel processing system disclosed in Patent reference 2 includes a reforming reaction apparatus converting reforming material, and reforming water or steam into a hydrogen-rich fuel gas, a dew point temperature measurement means measuring a dew point temperature of a fuel gas, a calculation means calculating a flow amount of the reforming material or a flow amount of water or steam on the basis of the measured dew point temperature, and a flow amount adjustment means adjusting the flow amount of the reforming water and the like on the basis of a calculation result of the calculation conducted by the calculation means. The flow amount of, for example, the reforming material, may change for an unintentional reason such as failure of a flow meter. As a result, a steam-to-carbon ratio (S/C ratio) of the fuel gas, which indicates a ratio of the reforming material and the steam relative to each other, may decrease to be lower than a specified value. In this case, carbon deposits at the reforming reaction apparatus, which may cause performance degradation or malfunction of the reforming reaction apparatus. According to the known fuel processing system of Patent reference 2, the calculation means estimates the S/C ratio on the basis of the dew point temperature of the fuel gas which is detected by the dew point temperature measurement means so that changes in the flow amount of the reforming material and the like are grasped. Further, the flow amount adjustment means adjusts the flow amount of the reforming material and the like so that the S/C ratio is within a specified range.

However, at the known fuel cell system and/or fuel processing system which are described above, in a case where composition of the fuel varies, amount of heat per unit amount that the fuel has varies. Thus, in a case where the fuel whose composition varies is supplied to a fuel cell, the amount of heat supplied to the fuel cell varies even though a supply amount of the fuel is adjusted appropriately by means of the calculation of the amount of air included in the fuel and/or the calculation of the dew point temperature. The composition of the fuel varies depending on types of the fuels, such as liquefied petroleum gas (LPG) and city gas. In addition, in a case of LPG, the composition of the fuel varies depending also on a remaining amount of the LPG in a gas cylinder. The city gas includes plural standards or classes such as 13A and 12A. Further, the composition of the city gas which is classified in the same standard may vary from one geographical region to another. Even in a case where a constant flow amount of the fuel is supplied to the fuel cell, there may be a shortage in the heat amount supplied to the fuel cell because of the variation or difference in the composition of the fuel. As a result, the fuel that is required for the power generation of the fuel cell may not be supplied thereto. On the other hand, in a case where an excessive amount of heat is supplied to the fuel cell, a temperature of the fuel cell excessively increases at a combusting portion at which the fuel is combusted. As a result, durability of the fuel cell may be influenced thereby.

Document US2013 288146 discloses a fuel cell system comprising: a fuel cell module, a fuel supply apparatus being supplying the fuel to the fuel cell module, a flow amount detection apparatus detecting flow amount of the fuel being supplied to the fuel cell module; a control apparatus controlling at least the flow amount of the fuel supplied by the fuel supply apparatus, the control apparatus including a feedback control portion performing a feedback control.

A need thus exists for a fuel cell system which appropriately controls amount of heat of fuel which is supplied to a fuel cell even in a case where composition of the fuel varies.

### SUMMARY

According to an aspect of this disclosure, a fuel cell system includes a fuel cell module to which fuel and oxidant gas are supplied, the fuel cell module including a fuel cell generating electric power from the fuel and the oxidant gas, a fuel supply apparatus supplying the fuel to the fuel cell module, a flow amount detection apparatus detecting flow amount of the fuel being supplied to the fuel cell module, a control apparatus controlling at least the flow amount of the fuel supplied by the fuel supply apparatus, the control apparatus including a feedback control portion performing a feedback control by calculating a control command value relative to the fuel supply apparatus on the basis of a difference between a detected flow amount of the fuel and a target flow amount of the fuel, and by outputting the control command value to the fuel supply apparatus, the detected flow amount being a flow amount of the fuel which is detected by the flow amount detection apparatus, the control apparatus including a storage portion including a first map indicating a first correlation between the target flow amount and the control command value for each of plural types of the fuel, and the control apparatus including a fuel type estimation portion estimating, on the basis of the first map, the type of the fuel from the control command value corresponding to the target flow amount of the fuel.

According to the above-described configuration, at the fuel type estimation portion, the control apparatus estimates the type of the fuel from the control command value which corresponds to the target flow amount of the fuel, on the basis of the first map illustrating the first correlation between the target flow amount and the control command value for each fuel type. Accordingly, even in a case where the type of the fuel supplied to the fuel cell system vary or differ, the control apparatus controls the fuel cell appropriately depending on the fuel type.

According to another aspect of this disclosure, the storage portion includes a second map indicating a plurality of second correlations each specified for each type of the fuel, each of the second correlations indicates a correlation between an electric power generation current of the fuel cell and the target flow amount of the fuel, the control apparatus includes a first selection portion selecting, on the basis of the second map, the second correlation of the type of the fuel estimated by the fuel type estimation portion, and the control apparatus includes a calculation portion calculating the target flow amount of the fuel on the basis of the second correlation selected by the first selection portion.

According to the above-described configuration, at the calculation portion, the control apparatus calculates the target flow amount of the fuel which corresponds to the electric power generation current on the basis of the second correlation of the electric power generation current of the fuel cell and the target flow amount of the fuel, for the fuel type estimated by the fuel type estimation portion. Accordingly, even in the case where the types of the fuels supplied to the fuel cell system vary or differ, the control apparatus controls the flow amount of the fuel appropriately depending on the fuel type. Consequently, the control apparatus appropriately controls the amount of heat of the fuel supplied to the fuel cell, depending on the fuel type.

According to another aspect of this disclosure, the storage portion includes a third map indicating a plurality of third correlations, each of the third correlations indicates, for each type of the fuel, a correlation between an actual flow amount of the fuel supplied to the fuel electrode and the detected flow amount, the control apparatus includes a second selection portion selecting, on the basis of the third map, the third correlation of the type of the fuel estimated by the fuel type estimation portion, and the control apparatus includes a correction portion correcting the detected flow amount on the basis of the third correlation selected by the second selection portion.

According to the above-described configuration, at the correction portion, the control apparatus corrects the detected flow amount into the actual flow amount on the basis of the third correlation of the actual flow amount and the detected flow amount for the fuel type estimated by the fuel type estimation portion. Accordingly, even in the case where the types of the fuels supplied to the fuel cell system vary or differ, the control apparatus corrects detection error of the flow amount detection apparatus, depending on the fuel type. Consequently, the control apparatus appropriately controls the amount of heat of the fuel supplied to the fuel cell, depending on the fuel type.

According to another aspect of this disclosure, in a case where the control apparatus performs the feedback control relative to the fuel supply apparatus and the fuel supply apparatus supplies the fuel so that the fuel cell generates the electric power at the electric power generation current, the target flow amount is calculated by the calculation portion, and the detected flow amount is corrected by the correction portion and thus the actual flow amount is calculated by the correction portion.

According to the above-described configuration, the fuel supply apparatus is feedback-controlled so that the actual flow amount that is supplied by the fuel supply apparatus to the fuel cell module is equal to the target flow amount for the fuel. Thus, the flow amount of the fuel is appropriately controlled. Consequently, the control apparatus appropriately controls the amount of heat of the fuel that is supplied to the fuel cell.

According to another aspect of this disclosure, the control apparatus includes a determination portion determining whether or not the control command value corresponding to the target flow amount of the fuel is within a predetermined allowable range, and a warning portion warning a user, the fuel type estimation portion estimates the type of the fuel in a case where the determination portion determines that the control command value corresponding to the target flow amount of the fuel is within the predetermined allowable range, and the warning portion warns the user in a case where the determination portion determines that the control command value corresponding to the target flow amount of the fuel is not within the predetermined allowable range.

According to the above-described configuration, at the determination portion, the control apparatus determines whether or not the control command value which corresponds to the target flow amount of the fuel is within the predetermined allowable range. Accordingly, the supplied fuel is screened or selected for whether or not the supplied fuel is a fuel that is usable at the fuel cell system. Then, in a case where it is determined by the determination portion that the control command value corresponding to the target flow amount of the fuel is within the predetermined allowable range, the control apparatus regards the supplied fuel as the usable fuel at the fuel cell system and estimates the fuel type at the fuel type estimation portion. Accordingly, the estimation of type of the fuel that can be used at the fuel cell system is reliably conducted. In addition, in a case where it is determined by the determination portion that the control command value corresponding to the target flow amount of the fuel is not within the predetermined allowable range, the control apparatus regards the supplied fuel as an unusable fuel that cannot be used at the fuel cell system and accordingly emits or provides the warning to the user by means of the warning portion. Accordingly, the user is informed that the fuel that cannot be used at the fuel cell system is being supplied to the fuel cell system.

According to another aspect of this disclosure, the predetermined allowable range corresponds to a range including the control command value corresponding to the target flow amount of the fuel that is usable in the fuel cell system.

According to the above-described configuration, it is determined whether or not the unusable fuel that cannot be used at the fuel cell system is being supplied.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating an embodiment of a fuel cell system disclosed here;
Fig. 2 is a block diagram of a feedback control portion of a control apparatus illustrated in Fig. 1;
Fig. 3 is a first map stored at the control apparatus illustrated in Fig. 1 and indicating a first correlation, for each fuel type, between a target flow amount and a control command value;
Fig. 4 is a second map stored at the control apparatus illustrated in Fig. 1 and indicating a second correlation between an electric power generation current of a fuel cell and the target flow amount of the fuel which is specified for each fuel type;
Fig. 5 is a third map stored at the control apparatus illustrated in Fig. 1 and indicating a third correlation, for each fuel type, between an actual flow amount of the fuel and a detected flow amount of the fuel; and
Fig. 6 is a flowchart of a control program executed at the control apparatus illustrated in Fig. 1.

### DETAILED DESCRIPTION

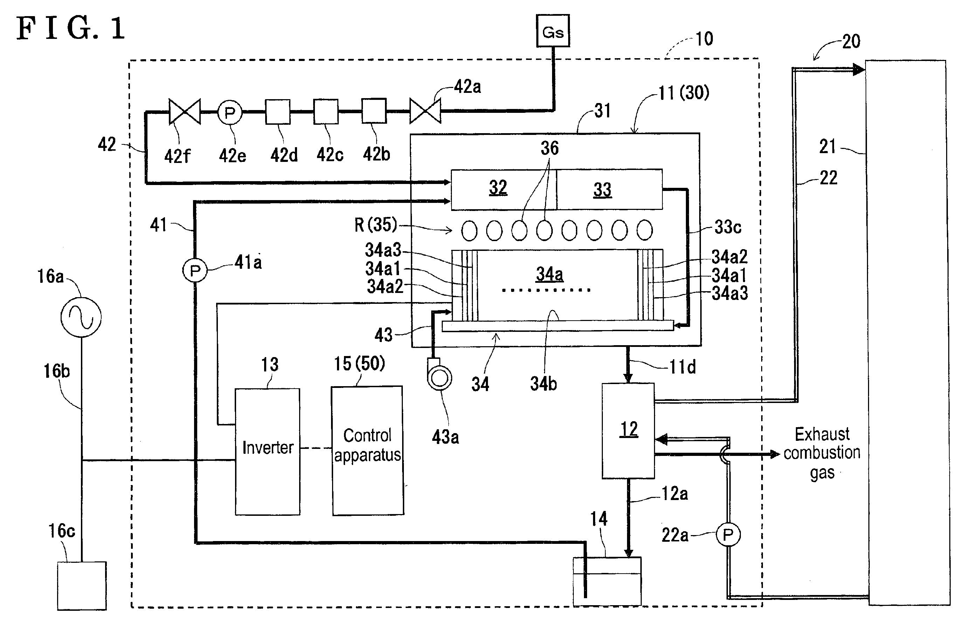

An embodiment of a fuel cell system disclosed here will be described. As illustrated in Fig. 1, the fuel cell system of the present embodiment includes a power generation unit 10 and a hot water storage tank 21. The power generation unit 10 includes a fuel cell module 11 (30), a heat exchanger 12, an inverter device 13, a water tank 14 and a control apparatus 15 (50).

The fuel cell module 11 is constituted to include at least a fuel cell 34a as will be described below. The fuel cell module 11 is supplied with fuel (a reforming material), reforming water and an oxidant gas (a cathode air). The fuel cell 34a includes a fuel electrode to which the fuel is supplied and an oxidant electrode to which the oxidant gas is supplied. The fuel cell 34a generates electric power using the fuel and the oxidant gas.

The heat exchanger 12 is supplied with an exhaust combustion gas discharged from the fuel cell module 11 and is supplied with stored hot water from the hot water storage tank 21, and accordingly, heat exchange is performed between the exhaust combustion gas and the stored hot water at the heat exchanger 12. Specifically, the hot water storage tank 21 stores therein the stored hot water, and a stored hot water circulation line 22 through which the stored hot water circulates (the stored hot water circulates in a direction of the arrows with the double lines in Fig. 1) is connected to the hot water storage tank 21. A stored hot water circulation pump 22a and the heat exchanger 12 are provided on the stored hot water circulation line 22 to be arranged from a lower end to an upper end in the above-described order. An exhaust pipe 11d from the fuel cell module 11 is connected (in a penetrating manner) to the heat exchanger 12. A condensed water supply pipe 12a, which is connected to the water tank 14, is connected to the heat exchanger 12.

The exhaust combustion gas from the fuel cell module 11 is introduced via the exhaust pipe 11 d into the heat exchanger 12, where the heat exchange between the exhaust combustion gas and the stored hot water is performed, and is condensed and cooled down at the heat exchanger 12. After the condensation, the exhaust combustion gas is discharged to an outside via the exhaust pipe 11d. In addition, the condensed water is supplied to the water tank 14 via the condensed water supply pipe 12a. The water tank 14 is configured to purify the condensed water by means of ion-exchange resin. The heat exchanger 12, the hot water storage tank 21 and the stored hot water circulation line 22, which are described above, constitute an exhaust heat recovery system 20. The exhaust heat recovery system 20 recovers exhaust heat of the fuel cell module 11 in the stored hot water and stores the exhaust heat therein.

Further, direct current voltage outputted from the fuel cell 34a is inputted to the inverter device 13 and is converted into a predetermined alternating current voltage at the inverter device 13. The converted predetermined alternating current voltage is outputted to a power supply line 16b. The power supply line 16b is electrically connected to a system power supply 16a which is an alternating-current power supply, and to an external electric power load 16c (for example, an electric appliance). In addition, the alternating current voltage from the system power supply 16a is inputted to the inverter device 13 via the power supply line 16b and is converted into a predetermined direct current voltage at the inverter device 13. The converted direct current voltage is outputted to auxiliary apparatuses (for example, the pumps and a blower) and/or to the control apparatus 15. The control apparatus 15 drives the auxiliary apparatuses and thus controls an operation of the fuel cell system. The control apparatus 15 at least controls the fuel cell 34a. During the power generation operation of the fuel cell system, the control apparatus 15 controls so that electric power generated by the fuel cell 34a corresponds to consumed electric power or electric power consumption of the external electric power load 16c.

The fuel cell module 30 is a solid oxide fuel cell module. The fuel cell module 30 is constituted at least by a casing 31 for the module (hereinafter referred to as the casing 31) and the fuel cell 34a. In the present embodiment, the fuel cell module 30 includes the casing 31, an evaporating portion 32, a reforming portion 33 and a fuel cell apparatus 34.

The casing 31 is made from a heat insulating material and is formed in a box-configuration. The evaporating portion 32, the reforming portion 33, the fuel cell apparatus 34 and a combusting space portion R corresponding to a combusting portion 35 are provided inside the casing 31 in such a manner that the evaporating portion 32 and the reforming portion 33 are positioned at an upper side relative to the fuel cell apparatus 34. The combusting portion 35 is arranged between the reforming portion 33 and the fuel cell apparatus 34.

The evaporating portion 32 is heated by a combustion gas, which will be described below, to evaporate the condensed water, and the evaporating portion 32 generates and derives water vapor (water vapor for reforming). In addition, the evaporating portion 32 preheats the fuel (the reforming material) that is supplied. Then, the water vapor (the water vapor for reforming) generated through the evaporation of the condensed water and the preheated fuel (the preheated reforming material) are mixed with each other at the evaporating portion 32, and then the mixture is provided to the reforming portion 33. For example, the fuel includes a gaseous fuel for reforming such as natural gas (a methane gas), city gas and a liquefied petroleum gas (LPG), and a liquid fuel for reforming such as kerosene, gasoline and methanol. In the present embodiment, the explanation is made on a case where city gas is used. Generally, city gas is provided by adding or mixing LPG to a natural gas, and thus amount of heat is adjusted. There are standards or classes specified for city gas, such as 13A and 12A, and amount of heat per unit amount that is included in the city gas differs from one type to another type. For example, the amount of heat per 1m³ of the city gas classified as standard 13A is approximately 45 megajoules and the amount of heat per 1m³ of the city gas classified as standard 12A is approximately 41 megajoules. The city gasses that are classified as either 13A or 12A may be used in the fuel cell system of the present embodiment. On the other hand, LPG cannot be used as the fuel for the fuel cell system of the present embodiment. LPG is constituted mainly by propane and butane. The amount of heat per 1m³ of LPG is approximately 101 megajoules. City gas includes a smaller specific gravity than LPG.

One end (a lower end) of a water supply pipe 41 is arranged inside the water tank 14 and the other end of the water supply pipe 41 is connected to the evaporating portion 32. A reforming water pump 41a is provided at the water supply pipe 41. The reforming water pump 41a supplies the reforming water (the condensed water) to the evaporating portion 32 and adjusts amount of flow (amount of flow per unit time) of the reforming water in accordance with a control command value from the control apparatus 15.

In addition, the fuel is supplied to the evaporating portion 32 from a fuel supply source (hereinafter referred to as a supply source) Gs via a fuel supply pipe 42. The supply source Gs is, for example, a gas piping of city gas. A shut-off valve 42a, a desulfurizer 42b, a flow sensor 42c (which serves as a flow amount detection apparatus), a buffer tank 42d, a fuel pump 42e (which serves as a fuel supply apparatus) and a check valve 42f are provided at the fuel supply pipe 42 to be arranged from an upstream of the fuel supply pipe 42 in the above-stated order.

The shut-off valve 42a is arranged between the supply source Gs and the desulfurizer 42b for opening/closing the fuel supply pipe 42 so that the flow of the fuel is allowed/blocked. The desulfurizer 42b absorbs (desulfurizes) odorant (an organic sulfur compound) added to the fuel. The flow sensor 42c detects a flow amount of the fuel which is being supplied to the fuel electrode. The flow sensor 42c is, for example, a thermal type flow sensor. The flow sensor 42c is arranged between the desulfurizer 42b and the buffer tank 42d. The flow sensor 42c detects the flow amount of the fuel (the amount of flow per unit time) which flows through the fuel supply pipe 42 at a position where the flow sensor 42c is arranged. A detected flow amount Qk, which is the flow amount detected by the flow sensor 42c, is transmitted to the control apparatus 15 as a detection signal. The buffer tank 42d absorbs vibration (pulsation) of the fuel pump 42e, and thus restricts decrease in accuracy of the flow sensor 42c and/or deviation from a true value, which may be caused by the pulsation of the fuel pump 42e.

The fuel pump 42e is arranged between the supply source Gs and the fuel electrode, and supplies the fuel to the fuel electrode. Specifically, the fuel pump 42e is arranged between the buffer tank 42d and the check valve 42f, and supplies the fuel (the reforming material) to the fuel cell module 30 (the evaporating portion 32). The fuel pump 42e adjusts the flow amount of the fuel flowing from the supply source Gs in accordance with the control command value from the control apparatus 15. At a position where the check valve 42f is arranged, the check valve 42f allows the flow from the supply source Gs to the fuel cell module 30 but the check valve 42f prohibits the flow in an opposite direction thereto.

The reforming portion 33 generates a reformed gas from the reforming material and the water vapor (the water vapor for reforming). Specifically, the reforming portion 33 is heated by the combustion gas, which will be described below, and thus the heat needed for a steam reforming reaction is supplied to the reforming portion 33. Then, the reforming portion 33 generates the reformed gas from the mixed gas (the reforming material, the water vapor for reforming) that is supplied from the evaporating portion 32. An inside of the reforming portion 33 is filled with catalyst (for example, ruthenium-based (Ru-based) catalyst or nickel-based (Ni-based) catalyst, and the reaction of the mixed gas is catalyzed and the mixed gas is reformed, and consequently, a hydrogen gas and a carbon monoxide gas are generated (the so-called steam reforming reaction). At the same time, the carbon monoxide and the water vapor, which are generated by the steam reforming reaction, react to each other and are converted to a hydrogen gas and carbon dioxide, that is, a so-called carbon monoxide shift reaction occurs. The generated gasses (the so-called reformed gas) are sent out to or provided to the fuel electrode of the fuel cell 34a. The reformed gas includes hydrogen, carbon monoxide, carbon dioxide, water vapor, unreformed natural gas (methane gas) and the propane gas, and the reforming water (the water vapor) that was not used in the reforming. The steam reforming reaction is an endoergic reaction and the carbon monoxide shift reaction is an exoergic reaction.

The fuel cell apparatus 34 includes the fuel cell 34a and a manifold 34b. The fuel cell 34a produces electric power from the reformed gas (an anode gas) and the oxidant gas (a cathode gas). The oxidant gas is air. The fuel cell 34a is constituted by plural cells 34a1 stacked one another along the right/left direction in Fig. 1. The cell 34a1 is constituted by the fuel electrode, an air electrode (an oxidant electrode) and electrolyte arranged between the fuel electrode and the air electrode. The fuel cell of the present embodiment is a solid oxide fuel cell and zirconium oxide, which is a type of solid oxide, is used as the electrolyte. As a fuel, for example, hydrogen, carbon monoxide, methane gas and propane gas are supplied to the fuel electrode of the fuel cell 34a. An operation temperature of the fuel cell of the present embodiment is approximately 400 °C to 1000 °C. In addition, as the fuel, not only the hydrogen but also natural gasses and/or a coal gas may be used as a direct fuel. In this case, the reforming portion 33 may be omitted.

A fuel flow passage 34a2, through which the reformed gas serving as the fuel flows, is provided at the fuel electrode-side of the cell 34a1. An air flow passage 34a3, through which the air (the cathode air) serving as the oxidant gas flows, is provided at the air electrode-side of the cell 34a 1.

The fuel cell 34a is arranged on the manifold 34b. The reformed gas is supplied from the reforming portion 33 via a reformed gas supply pipe 33c to the manifold 34b. A lower end (one end) of the fuel flow passage 34a2 is connected to a fuel outlet port of the manifold 34b. The reformed gas provided from the fuel outlet port is introduced from the lower end of the fuel flow passage 34a2, and then comes out from an upper end thereof. On the other hand, the cathode air sent out by a cathode air blower 43a is supplied via a cathode air supply pipe 43, and then is introduced from a lower end of the air flow passage 34a3, and then comes out from an upper end thereof.

The cathode air blower 43a is provided within the power generation unit 10. The cathode air blower 43a takes in the air that is inside the power generation unit 10 and discharges the air to the air electrode of the fuel cell 34a. A discharge amount of the cathode air blower 43a is controlled and adjusted by the control apparatus 15 (the discharge amount of the cathode air blower 43a is controlled depending on, for example, amount of load power of the fuel cell 34a, that is, the amount of electric power consumption of the external electric power load 16c).

At the fuel cell 34a, the power generation is performed with the reformed gas supplied to the fuel electrode and the oxidant gas supplied to the air electrode. That is, the reactions presented by a chemical formula 1 and a chemical formula 2, which are stated below, occurs at the fuel electrode. The reaction presented by a chemical formula 3, which is stated below, occurs at the air electrode. That is, oxide ion (O²⁻) generated at the air electrode passes through the electrolyte and reacts with the hydrogen at the fuel electrode, and thereby generating electric energy. Accordingly, the reformed gas and the oxidant gas (air), which were not used for the power generation, are sent out from the fuel flow passage 34a2 and the air flow passage 34a3.

(Chemical formula 1) H₂ + O²⁻ → H₂O + 2e⁻

(Chemical formula 2) CO + O²⁻ → CO₂ + 2e⁻

(Chemical formula 3) 1/2O₂ + 2e⁻ → O²⁻

The reformed gas which was not used for the power generation and is sent out from the fuel flow passage 34a2 and the air flow passage 34a3 (that is, an anode off-gas) is combusted in the combusting space portion R by the oxidant gas which was not used for the power generation (that is, a cathode off-gas). Then, the evaporating portion 32 and the reforming portion 33 are heated by the combustion gas (flame 36). Further, the combustion gas heats an inside of the fuel cell module 30 to the operation temperature. As described above, the combusting space portion R corresponds to the combusting portion 35 at which the anode off-gas from the fuel cell 34a and the cathode off-gas from the fuel cell 34a are combusted or burnt, and which heats the evaporating portion 32 and the reforming portion 33 accordingly.

The combusting portion 35 (the combusting space portion R) is for burning a combustible gas and the oxidant gas. The combustible gas is a gas that is combustible and, in the present embodiment, the combustible gas includes the fuel for reforming, the anode off-gas, carbon monoxide and the like. That is, the combusting portion 35 is for combusting the anode off-gas sent out from the fuel cell 34a. Then, the combusting portion 35 combusts the anode off-gas and generates the exhaust combustion gas. The generated exhaust combustion gas is discharged from the fuel cell module 30 via the exhaust pipe 11d.

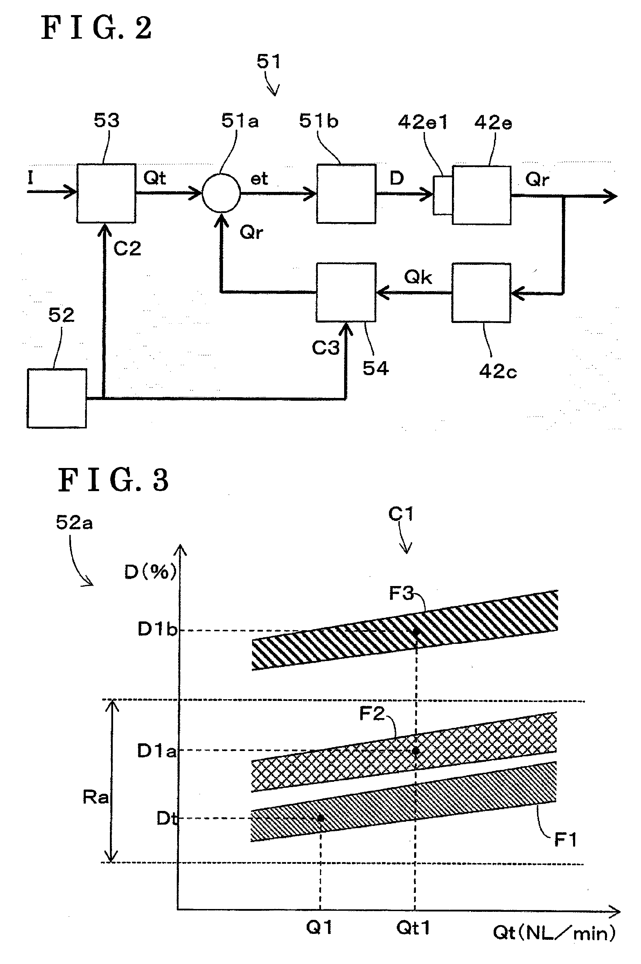

The control apparatus 50 at least controls the flow amount of the fuel that is supplied by the fuel pump 42e. As illustrated in Fig. 2, the control apparatus 50 includes a feedback control portion 51, a storage portion 52 and a calculation portion 53 and a correction portion 54. The feedback control portion 51 calculates a control command signal relative to the fuel pump 42e on the basis of a difference et, which is a difference between the detected flow amount Qk and a target flow amount Qt of the fuel, and then the feedback control portion 51 outputs the control command value to the fuel pump 42e. The feedback control portion 51 includes a subtractor 51a and a PI computing unit 51 b.

The target flow amount Qt is inputted to the subtractor 51a and the detected flow amount Qk is inputted to the subtractor 51 a from the flow sensor 42c. The subtractor 51 a subtracts the inputted detected flow amount Qk from the inputted target flow amount Qt to calculate the difference between the target flow amount Qt and the detected flow amount Qk (that is, difference et = target flow amount Qt - detected flow amount Qk). The PI computing unit 51 b is a controller which performs a feedback control. The difference et calculated at the subtractor 51a is inputted to the PI computing unit 51b, and the PI computing unit 51b calculates the number of rotations of the fuel pump 42e (a discharge amount or a flow amount of the pump), that is, a feedback amount (an operation amount), on the basis of the difference et. Because the fuel pump 42e is PWM-controlled, the feedback amount is calculated or computed in a form of a duty ratio D of the PWM-control.

In the present embodiment, the PI computing unit 51 b is a PI computing unit which performs proportional operation and integration operation on the basis of the difference et. The PI computing unit 51 b calculates the control command value as a feedback controlled variable or a feedback controlled quantity (the duty ratio D) of the fuel pump 42e. In the present embodiment, it is configured in a manner that the PI computing unit 51 b performs the PI control (functions of a proportional device and an integrator are performed), however, a computing unit which performs a PID control (functions of the proportional device, the integrator and a differentiator are performed) may be used instead of the PI control. Alternatively, a computing unit which performs a P control (only the function of the proportional device is performed) may be used instead of the PID control or the PI control. Each of the above-stated computing units is for calculating the amount of the feedback control variable.

The feedback controlled variable (the duty ratio D) is transmitted, as the control command value, from the PI computing unit 51 b to a driver circuit 42e1 of the fuel pump 42e, and the feedback control is performed so that the detected flow amount Qk is equal to the target flow amount Qt.

The storage portion 52 stores, for example, data which is used in the execution of a control program. A first map 52a, a second map 52b and a third map 52c are stored at the storage portion 52. As illustrated in Fig. 3, the first map 52a indicates a first correlation C1 between the target flow amount Qt and the control command value, for each of fuel types. Specifically, the control command value is expressed in the duty ratio D. In addition, because an ingredient amount of the fuel includes variation, there is variation in the duty ratio D which corresponds to or is according to the target flow amount Qt. Thus, the duty ratio D according to the target flow amount Qt is set or specified to include a predetermined range which corresponds to or represents the variation. Consequently, the first correlation C1 indicating the correlation of the target flow amount Qt with the duty ratio D is set or specified to include the predetermined range for each fuel type. Further, characteristic properties, for example, a specific gravity, of the fuel differs depending on a difference in the fuel types (composition of the fuel). Thus, in a case where the duty ratios D of the fuel types are compared to each other at the same target flow amount Qt, the fuel including a larger specific gravity includes a larger duty ratio D which corresponds to the aforementioned same target flow amount Qt. The first correlation C1 for each fuel type is derived from an actual measurement conducted in, for example, an experiment in advance. A first fuel F1 corresponds to city gas (class 12A), for example. A second fuel F2 corresponds to city gas (class 13A), for example. A third fuel F3 corresponds to LPG, for example.

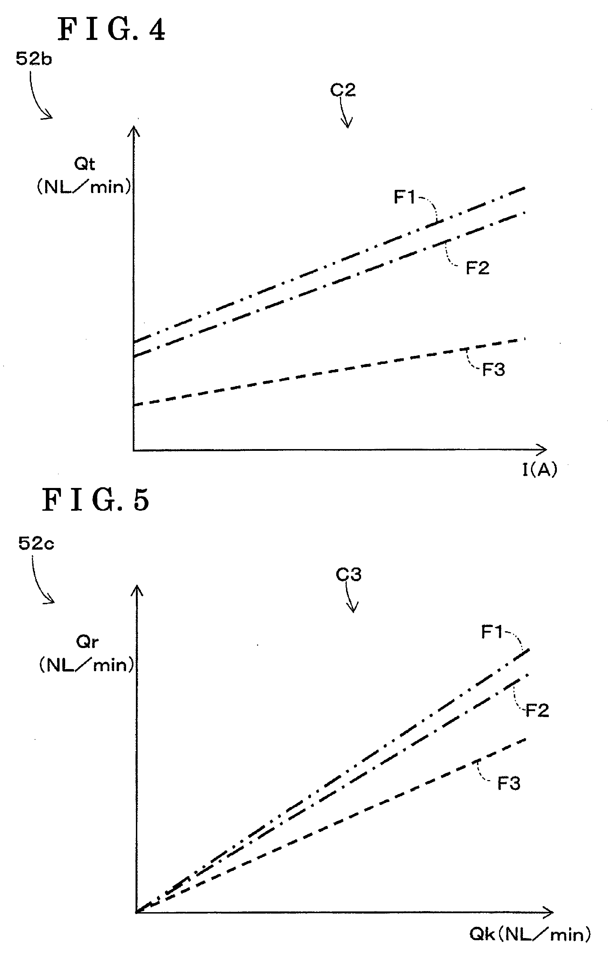

As illustrated in Fig. 4, the second map 52b indicates a second correlation C2, which is set or specified for each fuel type, between an electric power generation current I of the fuel cell 34a and the target flow amount Qt. Regardless of the fuel type, an amount of heat that should be supplied to the fuel cell 34a is specified in advance in accordance with the electric power generation current I. The amount of heat that should be supplied to the fuel cell 34a is an amount of heat derived by combining an amount of heat needed for the power generation at the fuel cell 34a and an amount of heat needed for the combustion at the combusting portion 35. Accordingly, as the electric power generation current I increase, the amount of heat needed at the fuel cell 34a increases. Here, an amount of heat (amount of heat per unit amount) which is possessed by the fuel differs depending on the difference of the fuel type (the difference in the composition of the fuel). Thus, the target flow amount Qt of the fuel, which is supplied to the fuel cell 34a to supply the necessary amount of heat which corresponds to the electric power generation current I, differs depending on the fuel type. Consequently, the second correlation C2 is specified for each of the fuel types, that is, the plural second correlations C2 are set. In addition, in a case where the target flow amount Qt for each of the fuel types are compared to each other at the same electric power generation current I, the fuel including a larger amount of heat per unit amount includes a smaller target flow amount Qt which corresponds to the aforementioned electric power generation current I.

As illustrated in Fig. 5, the third map 52c indicates a third correlation C3 between an actual flow amount Qr and the detected flow amount Qk, for each fuel type. The actual flow amount Qr is an actual flow amount of the fuel supplied to the fuel electrode. Generally, a flow sensor is configured to accurately detect a flow amount of a fluid having specific characteristic properties. That is, in a case where the specific characteristic properties of a fluid vary, a detection error of the detected flow amount Qk varies depending on the particular characteristic properties of the fluid. Consequently, due to the difference of the fuel types (the compositions of the fuels), the detection error of the detected flow amount Qk differs from one type to another type. In addition, the fuel which includes a larger specific gravity includes a larger detection error. Accordingly, in a case where the actual flow amount Qr for each of the fuel types are compared to each other at the same detected flow amount Qk, the fuel including a larger specific gravity includes a smaller actual flow amount Qr. The third correlation C3 for each fuel type is derived from an actual measurement conducted in, for example, an experiment in advance. Each of the actual flow amounts Qr in the third map 52c is measured with a flow sensor provided for a purpose of the experiment and including a relatively high detection accuracy.

In a case where the fuel pump 42e supplies the fuel under the feedback control so that the fuel cell 34a produces electric power at the electric power generation current I, the calculation portion 53 calculates the target flow amount Qt of the fuel that corresponds to the electric power generation current I. Specifically, as illustrated in Fig. 2, the second correlation C2 for the fuel type estimated by a fuel type estimation portion (which will be described later) and the electric power generation current I are inputted to the calculation portion 53. From the second correlation C2 for the estimated fuel type and the electric power generation current I, the calculation portion 53 calculates the target flow amount Qt corresponding to the electric power generation current I. The target flow amount Qt calculated by the calculation portion 53 is inputted to the subtractor 51 a of the feedback control portion 51.

In a case where the fuel pump 42e supplies the fuel under the feedback control so that the fuel cell 34a produces electric power at the electric power generation current I, the correction portion 54 corrects the detected flow amount Qk. Specifically, as illustrated in Fig. 2, the third correlation C3 for the fuel type estimated by the fuel type estimation portion (which will be described later) and the detected flow amount Qk are inputted to the correction portion 54. From the third correlation C3 for the fuel type and the detected flow amount Qk thereof, the correction portion 54 calculates the actual flow amount Qr which is according to the detected flow amount Qk. That is, the correction portion 54 corrects the detected and then inputted flow amount Qk into the actual flow amount Qr which corresponds to the detected flow amount Qk, and then the correction portion 54 outputs the actual flow amount Qr to the subtractor 51a.

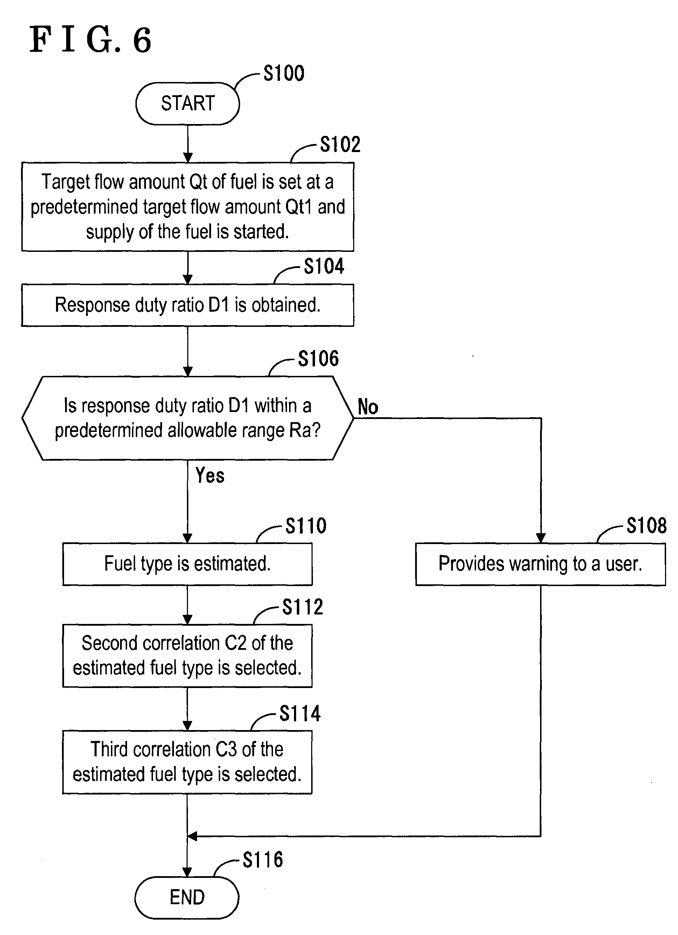

Next, an estimation control for estimating the fuel type that is supplied to the above-described fuel cell system will be explained following a flowchart illustrated in Fig. 6. At the estimation control for estimating the fuel type, when the feedback control of the fuel pump 42e is performed, the detected flow amount Qk is not corrected by the correction portion 54 and the detected flow amount Qk is inputted as is to the subtractor 51a.

The control apparatus 50 starts the program illustrated in Fig. 6 in a case where a start switch is pushed to start an operation or in a case where the operation is started in accordance with a planned operation. The control apparatus 50 sets the target flow amount Qt of the fuel at a predetermined target flow amount Qt1 and starts the supply of the fuel, and executes the feedback control of the fuel pump 42e (Step S102). The predetermined target flow amount Qt1 is, for example, 2.0 NUmin. The control apparatus 50 reads a response duty ratio D1, which is a duty ratio D that corresponds to the predetermined target flow amount Qt1 (Step S104). The response duty ratio D1 is the duty ratio D when the detected flow amount Qk is in a state where the detected flow amount Qk is stabilized at approximately the predetermined target flow amount Qt1. Specifically, the response duty ratio D1 is the duty ratio D when the difference et is equal to or less than a predetermined value (for example, 0.1 NUmin).

In addition, the control apparatus 50 determines whether or not the response duty ratio D1 is within a predetermined allowable range Ra (a determination portion; Step S106). The predetermined allowable range Ra is set or specified in a range of the duty ratio D which includes the duty ratio D that corresponds to the target flow amount Qt of the fuel that is usable in the fuel cell system of the present embodiment but which does not include the duty ratio D that corresponds to the target flow amount Qt of the fuel that is unusable at the fuel cell system of the present embodiment. In a case where the response duty ratio D1 is not within the predetermined allowable range Ra, the control apparatus 50 determines that the fuel that cannot be used for the fuel cell system of the present embodiment is being supplied. In this case, the control apparatus 50 determines "No" at Step S106 and provides warning to a user (a warning portion; Step S108). The warning may be indicated on display equipment (for example, an LED screen, a lamp) or an audio warning may be emitted via, for example, a speaker. In a case where the control apparatus 50 executes the warning of Step S108, the control apparatus 50 stops the supply of the fuel. On the other hand, in a case where the response duty ratio D1 is within the predetermined allowable range Ra, the control apparatus 50 determines that the fuel that is usable for the fuel cell system of the present embodiment is being supplied to the fuel cell system. In this case, the control apparatus 50 determines "Yes" at Step S106, and the program proceeds to Step S110.

The control apparatus 50 estimates the type of the fuel which is being supplied to the fuel cell system. Specifically, the control apparatus 50 estimates the fuel type from the control command value that corresponds to the target flow amount Qt on the basis of the first map 52a (a fuel type estimation portion; Step S110). That is, the control apparatus 50 determines the first correlation C1 of the fuel type to which the correlation between the predetermined target flow amount Qt1 and the response duty ratio D1 belongs. Then, the control apparatus 50 estimates the fuel type from the determination result.

Then, on the basis of the second map 52b, the control apparatus 50 selects the second correlation C2 of the fuel type estimated at Step S110 (a first selection portion; Step S112). In addition, on the basis of the third map 52c, the control apparatus 50 selects the third correlation C3 of the fuel type estimated at Step S110 (a second selection portion; Step S114).

Next, the operation of the fuel cell system will be described following the aforementioned flowchart. A case where the second fuel F2 (the city gas classified as class 13A) is supplied to the fuel cell system will be described. In a case where the start switch is pushed to start the operation or in a case where the operation is started in accordance with the planned operation, the control apparatus 50 sets the target flow amount Qt of the fuel to the predetermined target flow amount Qt1 and starts supplying the fuel (Step S102). At this time, the fuel pump 42e is feedback-controlled by the feedback control portion 51. In a case where the difference et is equal to or less than the predetermined value, the control apparatus 50 reads a first response duty ratio D1a which is the response duty ratio D1 of the second fuel F2 (Step S104). Here, the first response duty ratio D1 a belongs to or is included in the predetermined allowable range Ra on the first map 52a (refer to Fig. 3). Consequently, the control apparatus 50 determines that the fuel is usable at the fuel cell system of the present embodiment (Step S106), and estimates the fuel type.

The correlation of the first response duty ratio D1 a and the predetermined target flow amount Qt1 relative to each other belongs to the first correlation C1 of the second fuel F2. Consequently, the control apparatus 50 estimates that the fuel type is the second fuel F2 (the fuel type estimation portion; Step S110). Then, the control apparatus 50 selects the second correlation C2 of the second fuel F2 from the second map 52b (the first selection portion; Step S112). In addition, the control apparatus 50 selects the third correlation C3 of the second fuel F2 from the third map 52c (the second selection portion; Step S114).

In a case where the feedback control is executed relative to the fuel pump 42e and the fuel pump 42e supplies the fuel so that the fuel cell 34a produces electric power at the electric power generation current I, the target flow amount Qt is calculated by the calculation portion 53 and the detected flow amount Qk is corrected by the correction portion 54. Specifically, the second correlation C2 of the second fuel F2 is inputted to the calculation portion 53 and the electric power generation current I which corresponds to the amount of load power of the fuel cell 34a (the electric power consumption of the external electric power load 16c) is inputted to the calculation portion 53. From the electric power generation current I and the second correlation C2 of the second fuel F2, the calculation portion 53 calculates the target flow amount Qt for the second fuel F2. In addition, the third correlation C3 of the second fuel F2 is inputted to the correction portion 54 and the detected flow amount Qk is inputted from the flow sensor 42c to the correction portion 54. From the third correlation C3 of the second fuel F2 and the detected flow amount Qk, the correction portion 54 calculates the actual flow amount Qr for the second fuel F2. Thus, the fuel pump 42e is feedback-controlled so that the actual flow amount Qr, which is the flow amount supplied by the fuel pump 42e to the fuel cell module 30 (the evaporating portion 32), comes to be equal to the target flow amount Qt for the second fuel F2. Thus, the amount of flow of the second fuel F2 is appropriately controlled. Consequently, the control apparatus 50 appropriately controls the amount of heat of the second fuel F2 supplied to the fuel cell 34a.

Further, a case where the fuel is the third fuel F3 (LPG) will be described below. Because the specific gravity of the third fuel F3 is larger than the specific gravity of the second fuel F2, a second response duty ratio D1b, which is the response duty ratio D1 of the third fuel F3, is larger than the first response duty ratio D1a, which is the response duty ratio D1 of the second fuel F2 (refer to Fig. 3). Here, the second response duty ratio D1 b does not belong to or is not included in the predetermined allowable range Ra on the first map 52a. Consequently, the control apparatus 50 determines that the fuel is not the fuel that is usable at the fuel cell system of the present embodiment (Step S106), and thus provides the warning to the user (the warning portion; Step S108).

The aforementioned embodiment is an example of the fuel cell system disclosed here and is not limited thereto, and another configuration may be applied. For example, in each embodiment described above, the predetermined allowable range Ra is set so that the first and second fuels F1 and F2 (city gasses) are supplied to the fuel cell system but the third fuel F3 (LPG) is not supplied thereto. However, instead thereof, the predetermined allowable range Ra may be set so that the third fuel F3 (LPG) is supplied to the fuel cell system but the first and second fuels F1 and F2 (city gasses) are not supplied thereto. In this case, plural correlations may be set in accordance with standards of LPG which are specified in the Act on the Securing of Safety and the Optimization of Transaction of Liquefied Petroleum Gas and/or in the Japanese Industrial Standards (JIS K2240). In addition, because LPG is usually supplied from a gas cylinder by means of a natural vaporizing system, the composition of the LPG changes in response to changes of an amount of the LPG contained in the cylinder. That is, the change in the amount of the gas in the gas cylinder is caused by, for example, consumption of the LPG and/or replacement of the cylinder. Accordingly, for the same LPG standard, plural correlations may be set according to the amount of the gas contained in the gas cylinder.

In the aforementioned embodiment, the program illustrated in Fig. 6 is started in a case where the start switch is pushed to start the operation or in a case where the operation is started in accordance with the planned operation. However, instead thereof, the program may be configured to start during the power generation operation at every first predetermined time period (for example, twenty four hours). According to this configuration, even in a case where the composition of the fuel varies during the electric power generation operation, the amount of heat required by the fuel cell 34a is supplied appropriately. Alternatively, the program may be configured to start at each time when the target flow amount Qt, which is set in accordance with the electric power generation current I during the power generation operation, is specified at a flow amount that is same as the predetermined target flow amount Qt1, which is set at the target flow amount Qt in a case where the estimation control of the fuel type is executed. According to this configuration, the amount of heat required by the fuel cell 34a is supplied appropriately in response to a user demand for electricity. In addition, in a case where the estimation control of the fuel type is executed during the power generation operation, if the fuel type in the second correlation C2 which is already inputted in the calculation portion 53 and the fuel type estimated at the fuel type estimation portion (Step S110) coincide with or match each other, the selection may be conducted at the second selection portion (Step S114) after the fuel type is estimated by the fuel type estimation portion (Step S110), without conducting the selection of the second correlation C2 of the estimated fuel type at the first selection portion (Step S112). That is, in this case, the calculation portion 53 already calculates the target flow amount Qt of the fuel on the basis of the second correlation C2 of the estimated fuel type before the execution of the estimation control of the fuel type, and therefore the selection by the first selection portion may be omitted.

According to the program illustrated in Fig. 6 in the aforementioned embodiment, for estimating the fuel type, the supply of the fuel is started at the predetermined target flow amount Qt1 and the response duty ratio D1, which is the duty ratio D corresponding to the predetermined target flow amount Qt1, is read. However, instead thereof, the supply of the fuel may start at a predetermined duty ratio Dt and the fuel flow amount which corresponds to the predetermined duty ratio Dt may be read. For example, in a case where the flow amount which corresponds to the predetermined duty ratio Dt is a flow amount Q1, the relation between the predetermined duty ratio Dt and the flow amount Q1 relative to each other belongs to the first correlation C1 of the first fuel F1 on the first map 52a illustrated in Fig. 3. Accordingly, it is estimated that the type of the fuel being supplied is the first fuel F1. Alternatively, plural target flow amounts Qt may be set and the fuel is supplied, and then approximate expression or approximation formula may be derived from the plural target flow amounts Qt and the duty ratios D corresponding to the plural target flow amounts Qt. The derived approximate expression and the first correlation C1 may be compared with each other, and thus the fuel type may be estimated.

In the aforementioned embodiment, the third correlation C3 of the estimated fuel is inputted to the correction portion 54. However, instead thereof, an orientation factor a of the estimated fuel may be inputted to the correction portion 54 in a case where the third correlation C3 is expressed with a proportional relationship, that is, the actual flow amount Qr = (the orientation factor a x the detected flow amount Qk). In this case, the actual flow amount Qr may be calculated at the correction portion 54 through multiplication of the orientation factor a of the estimated fuel by the detected flow amount Qk. In addition, in the aforementioned embodiment, the response duty ratio D1, which is the duty ratio D corresponding to the target flow amount Qt, is the duty ratio D in a state where the difference et is equal to or less than the predetermined value. However, instead thereof, the response duty ratio D1 may be the duty ratio D at a time point when a second predetermined time period (for example, thirty seconds) passed from a time point when the supply of the fuel is started.

In the aforementioned embodiment, the fuel cell 34a is the solid oxide fuel cell. However, instead thereof, the fuel cell 34a may be a polymer electrolyte fuel cell.

## Claims

1. A fuel cell system comprising:
a fuel cell module (11, 30) to which fuel and oxidant gas are supplied, the fuel cell module (11, 30) including a fuel cell (34a) generating electric power from the fuel and the oxidant gas;
a fuel supply apparatus (42e) supplying the fuel to the fuel cell module (11, 30);
a flow amount detection apparatus (42c) detecting flow amount of the fuel being supplied to the fuel cell module (11, 30);
a control apparatus (15, 50) controlling at least the flow amount of the fuel supplied by the fuel supply apparatus (42e),
the control apparatus (15, 50) including a feedback control portion (51) performing a feedback control by calculating a control command value relative to the fuel supply apparatus (42e) on the basis of a difference (et) between a detected flow amount (Qk) of the fuel and a target flow amount (Qt) of the fuel, and by outputting the control command value to the fuel supply apparatus (42e), the detected flow amount (Qk) being a flow amount of the fuel which is detected by the flow amount detection apparatus (42c),
**characterized in that** the type of the fuel supplied to the fuel cell module varies; and
t he control apparatus (15, 50) includes a storage portion (52) including a first map (52a) indicating a first correlation (C1) between the target flow amount (Qt) and the control command value for each of plural types of the fuel; and
t he control apparatus (15, 50) includes a fuel type estimation portion (S110) estimating, on the basis of the first map (52a), the type of the fuel from the control command value corresponding to the target flow amount (Qt) of the fuel.

2. The fuel cell system according to claim 1, wherein
the storage portion (52) includes a second map (52b) indicating a plurality of second correlations (C2) each specified for each type of the fuel, each of the second correlations (C2) indicates a correlation between an electric power generation current (I) of the fuel cell (34a) and the target flow amount (Qt) of the fuel,
the control apparatus (15, 50) includes a first selection portion (S112) selecting, on the basis of the second map (52b), the second correlation (C2) of the type of the fuel estimated by the fuel type estimation portion (S110), and
the control apparatus (15, 50) includes a calculation portion (53) calculating the target flow amount (Qt) of the fuel on the basis of the second correlation (C2) selected by the first selection portion (S112).

3. The fuel cell system according to either claim 1 or 2, wherein
the storage portion (52) includes a third map (52c) indicating a plurality of third correlations (C3), each of the third correlations (C3) indicates, for each type of the fuel, a correlation between an actual flow amount (Qr) of the fuel supplied to the fuel electrode and the detected flow amount (Qk),
the control apparatus (15, 50) includes a second selection portion (S114) selecting, on the basis of the third map (52c), the third correlation (C3) of the type of the fuel estimated by the fuel type estimation portion (S110), and
the control apparatus (15, 50) includes a correction portion (54) correcting the detected flow amount (Qk) on the basis of the third correlation (C3) selected by the second selection portion (S114).

4. The fuel cell system according to any one of claims 1 to 3, wherein, in a case where the control apparatus (15, 50) performs the feedback control relative to the fuel supply apparatus (42e) and the fuel supply apparatus (42e) supplies the fuel so that the fuel cell (34a) generates the electric power at the electric power generation current (I), the target flow amount (Qt) is calculated by the calculation portion (53), and the detected flow amount (Qk) is corrected by the correction portion (54) and thus the actual flow amount (Qr) is calculated by the correction portion (54).

5. The fuel cell system according to any one of claims 1 to 4, wherein
the control apparatus (15, 50) includes a determination portion (S106) determining whether or not the control command value corresponding to the target flow amount (Qt) of the fuel is within a predetermined allowable range (Ra), and a warning portion (S108) warning a user,
the fuel type estimation portion (S110) estimates the type of the fuel in a case where the determination portion (S106) determines that the control command value corresponding to the target flow amount (Qt) of the fuel is within the predetermined allowable range (Ra), and
the warning portion (S108) warns the user in a case where the determination portion (S106) determines that the control command value corresponding to the target flow amount (Qt) of the fuel is not within the predetermined allowable range (Ra).

6. The fuel cell system according to any one of claims 1 to 5, wherein the predetermined allowable range (Ra) corresponds to a range including the control command value corresponding to the target flow amount (Qt) of the fuel that is usable in the fuel cell system.

## Patentansprüche

1. Brennstoffzellensystem mit:
einem Brennstoffzellenmodul (11, 30), dem Brennstoff und Oxidationsmittelgas zugeführt werden, wobei das Brennstoffzellenmodul (11, 30) eine Brennstoffzelle (34a) aufweist, die aus dem Brennstoff und dem Oxidationsmittelgas Elektroenergie erzeugt;
einer Brennstoffzufuhrvorrichtung (42e), die dem Brennstoffzellenmodul (11, 30) den Brennstoff zuführt;
einer Durchflussmengenerfassungsvorrichtung (42c), die eine Durchflussmenge des Brennstoffs erfasst, die dem Brennstoffzellenmodul (11, 30) zugeführt wird;
einer Steuerungsvorrichtung (15, 50), die zumindest die Durchflussmenge des Brennstoffs steuert, die von der Brennstoffzufuhrvorrichtung (42e) zugeführt wird,
wobei die Steuerungsvorrichtung (15, 50) einen Regelungsabschnitt (51) aufweist, der eine Regelung durchführt, indem er auf der Grundlage einer Differenz (et) zwischen einer erfassten Durchflussmenge (Qk) des Brennstoffs und einer Soll-Durchflussmenge (Qt) des Brennstoffs bezogen auf die Brennstoffzufuhrvorrichtung (42e) einen Steuerungsbefehlswert berechnet und indem er den Steuerungsbefehlswert an die Brennstoffzufuhrvorrichtung (42e) ausgibt, wobei die erfasste Durchflussmenge (Qk) eine Durchflussmenge des Brennstoffs ist, die von der Durchflussmengenerfassungsvorrichtung (42c) erfasst wird,
**dadurch gekennzeichnet, dass**
d ie Art des Brennstoffs variiert, die dem Brennstoffenzellenmodul zugeführt wird; und
d ie Steuerungsvorrichtung (15, 50) einen Speicherabschnitt (52) aufweist, der ein erstes Kennfeld (52a) enthält, das für jede der mehreren Arten des Brennstoffs eine erste Korrelation (C1) zwischen der Soll-Durchflussmenge (Qt) und dem Steuerungsbefehlswert angibt; und
d ie Steuerungsvorrichtung (15, 50) einen Brennstoffart-Schätzabschnitt (S110) aufweist, der auf Grundlage des ersten Kennfelds (52a) anhand des Steuerungsbefehlswert, der der Soll-Durchflussmenge (Qt) des Brennstoffs entspricht, die Art des Brennstoffs schätzt.

2. Brennstoffzellensystem nach Anspruch 1, wobei
der Speicherabschnitt (52) ein zweites Kennfeld (52b) enthält, das eine Vielzahl von zweiten Korrelationen (C2) angibt, die für jede Art des Brennstoffs spezifiziert sind, wobei jede der zweiten Korrelationen (C2) eine Korrelation zwischen einem Elektroenergieerzeugungsstrom (I) der Brennstoffzelle (34a) und der Soll-Durchflussmenge (Qt) des Brennstoffs angibt,
die Steuerungsvorrichtung (15, 50) einen ersten Auswahlabschnitt (S112) aufweist, der auf der Grundlage des zweiten Kennfelds (52b) die zweite Korrelation (C2) der vom Brennstoffart-Schätzabschnitt (S110) geschätzten Art des Brennstoffs auswählt, und
die Steuerungsvorrichtung (15, 50) einen Berechnungsabschnitt (53) aufweist, der auf der Grundlage der vom ersten Auswahlabschnitt (S112) gewählten zweiten Korrelation die Soll-Durchflussmenge (Qt) des Brennstoffs berechnet.

3. Brennstoffzellensystem nach entweder Anspruch 1 oder 2, wobei
der Speicherabschnitt (52) ein drittes Kennfeld (52c) aufweist, das eine Vielzahl von dritten Korrelationen (C3) angibt, wobei jede der dritten Korrelationen (C3) für jede Art des Brennstoffs eine Korrelation zwischen einer Ist-Durchflussmenge (Qr) des der Brennstoffelektrode zugeführten Brennstoffs und der erfassten Durchflussmenge (Qk) angibt,
die Steuerungsvorrichtung (15, 50) einen zweiten Auswahlabschnitt (S114) aufweist, der auf der Grundlage des dritten Kennfelds (52c) die dritte Korrelation (C3) der vom Brennstoffart-Schätzabschnitt (S110) geschätzten Art des Brennstoffs auswählt, und
die Steuerungsvorrichtung (15, 50) einen Korrekturabschnitt (54) aufweist, der beruhend auf der vom zweiten Auswahlabschnitt (S114) ausgewählten dritten Korrelation (C3) die erfasste Durchflussmenge (Qk) korrigiert.

4. Brennstoffzellensystem nach einem der Ansprüche 1 bis 3, wobei in einem Fall, in dem die Steuerungsvorrichtung (15, 50) bezogen auf die Brennstoffzufuhrvorrichtung (42e) die Regelung durchführt und die Brennstoffzufuhrvorrichtung (42e) den Brennstoff so zuführt, dass die Brennstoffzelle (34a) die Elektroenergie mit dem Elektroenergieerzeugungsstrom (I) erzeugt, vom Berechnungsabschnitt (53) die Soll-Durchflussmenge (Qt) berechnet wird und vom Korrekturabschnitt (54) die erfasste Durchflussmenge (Qk) korrigiert wird und somit vom Korrekturabschnitt (54) die Ist-Durchflussmenge (Qr) berechnet wird.

5. Brennstoffzellensystem nach einem der Ansprüche 1 bis 4, wobei
die Steuerungsvorrichtung (15, 50) einen Bestimmungsabschnitt (S106), der bestimmt, ob der Steuerungsbefehlswert, der der Soll-Durchflussmenge (Qt) des Brennstoffs entspricht, in einem vorbestimmten zulässigen Bereich (Ra) liegt, und einen Warnabschnitt (S108) aufweist, der einen Benutzer warnt,
der Brennstoffart-Schätzabschnitt (S110) in einem Fall, in dem der Bestimmungsabschnitt (S106) bestimmt, dass der Steuerungsbefehlswert, der der Soll-Durchflussmenge (Qt) des Brennstoffs entspricht, im vorbestimmten zulässigen Bereich (Ra) liegt, die Art des Brennstoffs schätzt und
der Warnabschnitt (S108) in einem Fall, in dem der Bestimmungsabschnitt (S106) bestimmt, dass der Steuerungsbefehlswert, der der Soll-Durchflussmenge (Qt) des Brennstoffs entspricht, nicht im vorbestimmten zulässigen Bereich (Ra) liegt, den Benutzer warnt.

6. Brennstoffzellensystem nach einem der Ansprüche 1 bis 5, wobei der vorbestimmte zulässige Bereich (Ra) einem Bereich entspricht, der den Steuerungsbefehlswert enthält, der der im Brennstoffzellensystem verwendbaren Soll-Durchflussmenge (Qt) des Brennstoffs entspricht.

## Revendications

1. Système de pile à combustible qui comprend :
un module de pile à combustible (11, 30) auquel sont fournis un combustible et un gaz oxydant, le module de pile à combustible (11, 30) comprenant une pile à combustible (34a) qui génère de l'électricité à partir du combustible et du gaz oxydant ;
un appareil d'alimentation en combustible (42e) qui fournit le combustible au module de pile à combustible (11, 30) ;
un appareil de détection de quantité d'écoulement (42c) qui détecte la quantité d'écoulement du combustible fourni au module de pile à combustible (11, 30) ;
un appareil de commande (15, 50) qui contrôle au moins la quantité d'écoulement du combustible fourni par l'appareil d'alimentation en combustible (42e),
l'appareil de commande (15, 50) comprenant une partie de contrôle rétroactif (51) qui effectue un contrôle rétroactif en calculant une valeur de commande de contrôle par rapport à l'appareil d'alimentation en combustible (42e) sur la base d'une différence (et) entre une quantité d'écoulement détectée (Qk) du combustible et une quantité d'écoulement cible (Qt) du combustible, et en fournissant la valeur de commande de contrôle à l'appareil d'alimentation en combustible (42e), la quantité d'écoulement détectée (Qk) étant une quantité d'écoulement du combustible qui est détectée par l'appareil de détection de quantité d'écoulement (42c),
**caractérisé en ce que** le type de combustible fourni au module de pile à combustible varie ; et
l'appareil de commande (15, 50) comprend une partie de stockage (52) qui comprend un premier graphique (52a) qui indique une première corrélation (C1) entre la quantité d'écoulement cible (Qt) et la valeur de commande de contrôle pour chacun de plusieurs types de combustible ; et
l'appareil de commande (15, 50) comprend une partie d'estimation de type de combustible (S110) qui estime, sur la base du premier graphique (52a), le type de combustible à partir de la valeur de commande de contrôle qui correspond à la quantité d'écoulement cible (Qt) du combustible.

2. Système de pile à combustible selon la revendication 1, dans lequel
la partie de stockage (52) comprend un second graphique (52b) qui indique une pluralité de secondes corrélations (C2) chacune spécifiées pour chaque type de combustible, chacune des secondes corrélations (C2) indiquant une corrélation entre un courant de génération d'électricité (I) d ela pile à combustible (34a) et la quantité d'écoulement cible (Qt) du combustible,
l'appareil de commande (15, 50) comprend une première partie de sélection (S112) qui sélectionne, sur la base du second graphique (52b), la seconde corrélation (C2) du type de combustible estimé par la partie d'estimation de type de combustible (S110), et
l'appareil de commande (15, 50) comprend une partie de calcul (53) qui calcule la quantité d'écoulement cible (Qt) du combustible sur la base de la seconde corrélation (C2) sélectionnée par la première partie de sélection (S112).

3. Système de pile à combustible selon la revendication 1 ou 2, dans lequel
la partie de stockage (52) comprend un troisième graphique (52c) qui indique une pluralité de troisièmes corrélations (C3), chacune des troisièmes corrélations (C3) indiquant, pour chaque type de combustible, une corrélation entre une quantité d'écoulement réelle (Qr) du combustible fourni à l'électrode à combustible et la quantité d'écoulement détectée (Qk),
l'appareil de commande (15, 50) comprend une seconde partie de sélection (S114) qui sélectionne, sur la base du troisième graphique (52c), la troisième corrélation (C3) du type de combustible estimé par la partie d'estimation de type de combustible (S110), et
l'appareil de commande (15, 50) comprend une partie de correction (54) qui corrige la quantité d'écoulement détectée (Qk) sur la base de la troisième corrélation (C3) sélectionnée par la seconde partie de sélection (S114).

4. Système de pile à combustible selon l'une quelconque des revendications 1 à 3, dans lequel, lorsque l'appareil de commande (15, 50) exécute le contrôle rétroactif par rapport à l'appareil d'alimentation en combustible (42e) et l'appareil d'alimentation en combustible (42e) fournit le combustible de sorte que la pile à combustible (34a) génère l'électricité avec le courant de génération d'électricité (I), la quantité d'écoulement cible (Qt) est calculée par la partie de calcul (53), et la quantité d'écoulement détectée (Qk) est corrigée par la partie de correction (54) et, ainsi, la quantité d'écoulement réelle (Qr) est calculée par la partie de correction (54).

5. Système de pile à combustible selon l'une quelconque des revendications 1 à 4, dans lequel
l'appareil de commande (15, 50) comprend une partie de détermination (S106) qui détermine si la valeur de commande de contrôle qui correspond à la quantité d'écoulement cible (Qt) du combustible se trouve ou non dans des limites prédéterminées acceptables (Ra), et une partie d'alerte (S108) qui alerte un utilisateur,
la partie d'estimation de type de combustible (S110) estime le type de combustible lorsque la partie de détermination (S106) détermine que la valeur de commande de contrôle qui correspond à la quantité d'écoulement cible (Qt) du combustible se trouve dans des limites prédéterminées acceptables (Ra), et
la partie d'alerte (S108) alerte l'utilisateur lorsque la partie de détermination (S106) détermine que la valeur de commande de contrôle qui correspond à la quantité d'écoulement cible (Qt) du carburant ne se trouve pas dans des limites prédéterminées acceptables (Ra).

6. Système de pile à combustible selon l'une quelconque des revendications 1 à 5, dans lequel les limites prédéterminées acceptables (Ra) correspondent à des limites qui comprennent la valeur de commande de contrôle qui correspond à la quantité d'écoulement cible (Qt) du combustible qui peut être utilisée dans le système de pile à combustible.
